Europäisches Patentamt

(19) European Patent Office

Office européen des brevets

(11) Numéro de publication: **0 089 874**
**B1**

(12) **FASCICULE DE BREVET EUROPEEN**

(45) Date de publication du fascicule du brevet: **01.06.88**

(21) Numéro de dépôt: **83400504.3**

(22) Date de dépôt: **11.03.83**

(51) Int. Cl.⁴: **G 11 B 7/24**

(54) **Disque optique protégé comprenant un élément souple de fermeture.**

(30) Priorité: **23.03.82 FR 8204913**

(43) Date de publication de la demande:
**28.09.83 Bulletin 83/39**

(45) Mention de la délivrance du brevet:
**01.06.88 Bulletin 88/22**

(84) Etats contractants désignés:
**DE GB IT NL SE**

(56) Documents cités:
**EP-A-0 024 194**
**EP-A-0 042 307**
**FR-A-2 326 005**
**FR-A-2 437 668**
**NL-A-7 900 205**

**PATENTS ABSTRACTS OF JAPAN, vol. 3, no. 159, 27 décembre 1979, page 86E162 & JP-A-54139702**

**PATENTS ABSTRACTS OF JAPAN, vol. 3, no. 129, 26 octobre 1979, page 63E147 & JP-A-54106204**

(73) Titulaire: **THOMSON-CSF**
**173, Boulevard Haussmann**
**F-75379 Paris Cédex 08 (FR)**

(72) Inventeur: **Cornet, Jean**
**THOMSON-CSF SCPI 173, bld Haussmann**
**F-75379 Paris Cedex 08 (FR)**
Inventeur: **Lange, François**
**THOMSON-CSF SCPI 173, bld Haussmann**
**F-75379 Paris Cedex 08 (FR)**
Inventeur: **Le Carvennec, François**
**THOMSON-CSF SCPI 173, bld Haussmann**
**F-75379 Paris Cedex 08 (FR)**
Inventeur: **Lehureau, Jean-Claude**
**THOMSON-CSF SCPI 173, bld Haussmann**
**F-75379 Paris Cedex 08 (FR)**
Inventeur: **Rascle, Roger**
**THOMSON-CSF SCPI 173, bld Haussmann**
**F-75379 Paris Cedex 08 (FR)**

(74) Mandataire: **Weinmiller, Jürgen et al**
**Lennéstrasse 9 Postfach 24**
**D-8133 Feldafing (DE)**

# 0 089 874

(58) Documents cités:

**PATENTS ABSTRACTS OF JAPAN, vol. 5, no. 150, 22 septembre 1981, page 146P81 & JP-A-5683852**

**PATENTS ABSTRACTS OF JAPAN, vol. 5, no. 150, 22 septembre 1981, page 146P81 & JP-A-5683851**

## Description

La présente invention concerne un disque optique protégé destiné à l'enregistrement d'information, cette information étant contenue dans une couche d'inscription constituée par un matériau sensible au rayonnement.

L'inscription de l'information se présente généralement sous la forme d'irrégularités de surface de l'ordre du micron. Les opérations de fabrication des disques optiques, qu'ils soient prégravés ou non, s'effectuent en atmosphère dépoussiérée avec beaucoup de précautions afin d'éviter toute altération du support ou de la couche sensible. C'est au cours de l'utilisation du disque par un usager que des détériorations peuvent se produire ainsi qu'au cours de son stockage. Il convient donc de protéger les plages d'inscription de tout ce qui pourrait leur occasionner des dégradations: poussières, traces de doigts, mise en contact de la couche thermosensible avec des objets pouvant l'abimer ou la rayer. Le système de protection d'un disque optique doit également permettre des manipulations aisées et fréquentes par un utilisateur. Le document EP—A—42307 décrit une structure à couche enregistrable comportant un moyen de protection qui repose sur cette couche par l'intermédiaire d'une barrière thermomécanique solide. Le document FR—A—2 326 005 décrit une structure à couche enregistrable comportant une feuille mince perméable au rayonnement inscripteur qui repose sur cette couche mais qui s'en sépare par les effets de la force centrifuge lorsqu'on crée une adduction d'air au centre du disque. Cette dernière disposition ne comporte pas de moyens de jonction périphériques.

Il est connu de protéger la couche sensible servant à l'inscription d'information et déposée sur un support rigide à l'aide d'une plaque rigide d'épaisseur voisine du millimètre maintenue à une certaine distance du support par l'intermédiaire d'entretoises. L'inconvénient majeur de cette structure tient à l'assemblage des quatre éléments la constituant: le support rigide, la plaque de protection rigide et les deux entretoises circulaires. L'entretoise périphérique en particulier pose un délicat problème de centrage puisqu'elle ne possède aucune surface de contact avec la broche de centrage contrairement au trois autres éléments. La vitesse de rotation d'un disque optique étant de l'ordre de 1500 t/mn, tout défaut d'équilibrage entraîne l'existence de forces centrifuges non négligeables et l'apparition de vibrations préjudiciables à un fonctionnement correct du système.

On a donc cherché à éviter la présence d'entretoises et à simplifier l'assemblage du disque protégé par un capot de protection rigide préformé et collé sur un support rigide transparent au rayonnement, la couche sensible étant déposée sur ce support.

Le document FR—A—2 437 668 décrit un disque protégé suivant la première partie de la revendication 1. Une disposition similaire est décrite dans le document NL—A—7 900 205 (qui montre en outre une structure de disque protégé dans laquelle la hauteur d'une chambre annulaire est déterminée par des entretoises). Si le problème d'équilibrage du disque a été résolu, un autre problème se pose du fait de la lecture ou de l'inscription à travers le support rigide. En effet, les fluctuations d'épaisseur qui existent dans ce cas pour un disque ou d'un disque à l'autre conduisent à des aberrations optiques qui modifient la répartition d'énergie dans la tache optique focalisée sur la couche sensible, ce qui nuit à la qualité ou la reproductibilité de l'inscription. D'autre part, des structures sensibles du type tri-couche ne peuvent être valablement gravées à travers le substrat.

L'invention a donc pour objet un disque optique protégé pour l'enregistrement d'information au moyen d'un faisceau optique incident focalisé, ledit disque comprenant une chambre annulaire dans laquelle est située une structure enregistrable avec ledit faisceau optique et un trou central qui permet le passage d'une broche d'entrainement; ladite structure ayant une surface exposée à l'atmosphère remplissant ladite chambre; ladite chambre étant délimitée par un élément de matériau réfringent et par un élément support de la ladite structure ayant une rigidité supérieure, lesdits éléments étant réunis l'une à l'autre par des moyens de jonction situés dans des plages annulaires encadrant ladite chambre annulaire; l'un desdits éléments présentant une dépression annulaire dont le fond plan est parallèle à ladite surface et dont les rebords intérieur et extérieur coaxiaux forment ladite jonction avec l'autre desdits éléments, caractérisé en ce que ledit élément de matériau réfringent est un élément souple, en ce que lesdits moyens de jonction assurent une étanchéité meilleure à la périphérie de ladite chambre qu'au centre pour éviter que ledit élément puisse venir toucher la plage d'inscription contenue dans ladite surface, et en ce qu'au moins celui desdits éléments ayant une rigidité supérieure est muni dudit trou central.

L'invention a également pour objet un système d'enregistrement et de lecture d'information comprenant un disque optique protégé, ledit système comprenant des moyens de mise en rotation dudit disque et un couvre disque, caractérisé en ce que ledit couvre disque est agencé pour former avec la face externe dudit élément mince un coussin d'air; la dépression dans ledit coussin résultant de l'écoulement centrifuge induit par la rotation dudit disque pour contrecarrer la tendance dudit élément mince à venir en contact avec ladite surface.

D'autres objets et avantages de l'invention seront mieux compris à l'aide de la description ci-après et des figures annexées parmi lesquelles:

—la figure 1 est une vue en coupe d'un disque optique protégé selon l'invention,

—la figure 2 est une vue partielle en coupe d'un disque optique protégé selon l'invention,

—la figure 3 est une vue en coupe d'un dispositif de plissement d'un élément souple,

—la figure 4 est une vue explicative de la mise en oeuvre d'un dispositif de plissement,

—la figure 5 est une variante d'un disque optique protégé selon l'invention,

—la figure 6 est une vue en coupe d'un système de lecture ou d'écriture d'un disque optique protégé et comprenant un couvre-disque.

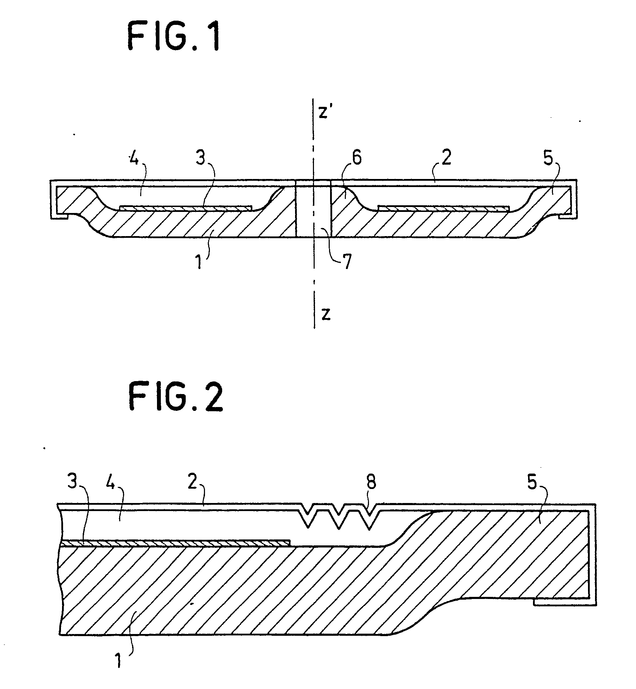

La figure 1 est une vue en coupe d'un disque optique protégé selon l'invention et fonctionnant en réflexion. Il comprend un élément rigide 1 circulaire et préformé. Cet élément peut être constitué de tout matériau assurant une bonne rigidité au disque. Cette rigidité peut être assurée principalement par une épaisseur suffisante de l'élément 1 dans le cas où celui-ci est réalisé par exemple en matière plastique telle que le chlorure de polyvinyle. Lorsque l'élément 1 est métallique, en aluminium par exemple, c'est sa nature même qui assure la rigidité au disque et son épaisseur peut être de l'ordre du millimètre. L'élément rigide 1 est destiné à recevoir la couche sensible formant la plage d'inscription 3. Afin d'assurer une bonne planéité de la face de l'élément rigide supportant la couche sensible, on peut déposer sur cette face une couche de lissage avant le dépôt de la couche sensible. La couche sensible 3 peut être constituée d'une couche thermodégradable à basse température, de l'ordre de 100 à 150°C, déposée par centrifugation et évaporation. Comme on peut le voir sur la figure 1, l'élément rigide 1 a la forme d'une cuvette ayant des rebords circulaires 5 et 6 dont les axes de révolution sont confondus avec l'axe de révolution zz' de l'élément 1. La plage d'inscription est donc située dans le fond de la cuvette formée par l'élément 1 qui possède un trou 7 pour le passage d'une broche d'entraînement. Afin de protéger la couche 3 on recouvre l'élément 1 d'un élément souple 2 fixé sur les rebords 5 et 6. Les faces supérieures des rebords 5 et 6 sont situées dans un même plan, ce plan étant parallèle au plan de la plage d'inscription, et définissent ainsi deux plages annulaires assurant la jonction entre les éléments 1 et 2. L'élément 2 peut lui aussi être percé d'un trou central pour le passage de la broche d'entraînement si nécessaire. Les éléments 1 et 2 délimitent une chambre annulaire 4 surplombant la plage d'inscription 3.

Le rayonnement optique de lecture et/ou d'écriture accède à la plage d'inscription 3 en traversant l'élément 2. Celui-ci doit donc être transparent au rayonnement optique et ne doit pas le perturber. Or les films plastiques sont généralement obtenus par extrusion et calandrage et sont par suite très biréfringents. Afin de ne pas amener de perturbations sensibles au rayonnement optique dues à ces phénomènes de biréfringence, on estime que l'élément 2 doit entraîner une différence de marche

$$e \cdot \Delta n \leqslant \frac{\lambda}{10},$$

e étant l'épaisseur de l'élément 2, $\Delta n$ la biréfringence et $\lambda$ la longueur d'onde du rayonnement optique. Par exemple, on peut employer une fauille calandrée de chlorure de polyvinyle de 0,2 mm d'épaisseur, l'égèrement tendue et scellée ou fixée par thermosoudure sur les rebords 5 et 6 de l'élément 1 et présentant une biréfringence de $4.10^{-4}$. La distance séparant la plage d'inscription de l'élément souple 2 est de l'ordre de 1 mm. Par suite da sa faible épaisseur et de sa souplesse, l'élément 2 n'altère pas la rigidité de l'élément 1. D'autre part, il n'a aucune influence néfaste sur le disque en rotation car il n'introduit pas de défaut d'équilibrage notable étant donnée sa faible masse. On estime d'autre part que la déformation de cet élément souple 2, par suite d'éventuelles variations de pression gazeuse à l'intérieur de l'espace annulaire, n'a pas d'influence notable sur le rayonnement optique de lecture ou d'écriture étant donnée la faible épaisseur de cet élément 2.

Un autre avantage du film mince est que l'on peut employer pour la focalisation du rayonnement optique des objectifs à focale courte. En effet, du fait de la faible épaisseur de l'élément 2, la plage d'inscription peut être située à une faible distance de la focale. Ceci évite à l'objectif de posséder une masse trop importante et facilite son asservissement au suivi de l'information déposée sur le disque. La courte distance frontale évite également d'autres phénomènes nuisibles tels que l'aberration sphérique et l'astigmatisme si le rayonnement optique est oblique.

Lors de la fixation de l'élément souple 2 sur l'élément rigide 1, il convient d'assurer à la chambre annulaire 4 une excellente étanchéité, 1 est nécessaire que l'étanchéité soit meilleure à la périphérie qu'au centre. C'est une autre conséquence des forces centrifuges, provoquées par la rotation du disque, qui ont tendance à chasser l'air de la chambre annulaire par la périphérie du disque. Si l'air se raréfie à l'intérieur de la chambre annulaire, le film souple 2 aura tendance à venir toucher la plage d'inscription. Afin d'éviter ce phénomène, il faut que les fuites périphériques soient limitées et que l'air évacué soit compensé par de l'air entrant vers le centre du disque. Comme le diamètre extérieur de la chambre 4 est beaucoup plus grand que son diamètre intérieur, l'étanchéité du film 2 sur le rebord 5 doit être plus soigné que sur le rebord 6. On peut, comme cela est représenté sur la figure 1, assurer la fixation du film sur une surface plus importante sur le rebord 5 que sur le rebord 6.

Afin d'éviter les rayures du film souple, on peut traiter la face externe du film pour la durcir. Une couche anti-rayure de polysiloxane convient parfaitement et n'altère pas les propriétés optiques de l'élément souple.

Afin d'assurer à l'élément 2 une plus grande souplesse, on peut provoquer un plissement du film par exemple dans une zone située vers la périphérie du disque et en dehors du chemin du rayonnement optique de lecture ou d'écriture. Le film présentera donc une zone annulaire périphérique ressemblant à la membrane de certains haut-parleurs, toutes proportions gardées. La figure 2 est une vue partielle en coupe d'un disque optique dont l'élément souple présente une zone annulaire de plissement formée de plis 8.

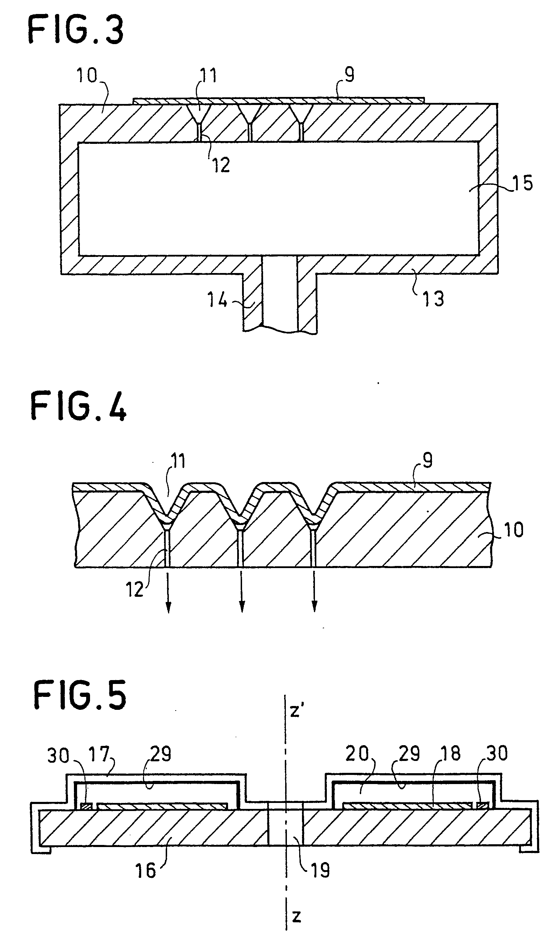

La figure 3 est une vue en coupe d'un dispositif destiné à former des plis sur un film souple. Ce dispositif comprend une boîte 13 enfermant un volume d'air 15 qui est reliée par un tube 14 à une pompe à vide non représentée. La face supérieure 10 de la boîte est chauffante et est percée de rainures 11 reliées à la chambre 15 par des trous 12. Le film à déformer 9 est posé sur la face 10 qui, par chauffage, le rend plus malléable. Lorsque la pompe à vide entre en action le film se déforme et vient se plaquer contre les parois des rainures 11. C'est ce que représente la figure 4 qui est un agrandissement d'une partie de la figure 3. Les flèches en sortie des trous 12 représentant l'aspiration de l'air par la pompe à vide. Le chauffage de la face 10 est ensuite arrêté et quand le film est suffisamment refroidi, on remplit d'air la chambre 15 et on obtient un film déformé à l'endroit des rainures.

Dans la réalisation précédente, c'était l'élément rigide qui formait la cuvette mais on peut fabriquer un disque optique protégé où c'est l'élément souple qui sert de cuvette. C'est ce que représente la figure 5 qui est une variante d'un disque optique protégé selon l'invention. L'élément rigide est formé par un disque plat 16 percé d'un trou central 19 et supportant une couche sensible annulaire 18. L'élément souple 17 a été préformé et a l'aspect d'une cuvette ou d'un capot, sont épaisseur peut aller jusqu'à 0,5 mm. Il est éventuellement percé d'un trou de même dimension que celui de l'élément rigide. Les axes de ces trous qui serviront au passage de la broche d'entraînement, sont confondus selon l'axe de symétrie du disque zz'. L'élément souple 17 servant de capot peut se rabattre sous l'élément rigide 16 comme le montre la figure 5. Si on désire une très bonne étanchéité périphérique de la chambre annulaire, le capot peut être scellé ou fixé par thermosoudure. On peut assurer une meilleure étanchéité à la périphérie qu'au centre du disque en fonction de l'importance des surfaces collées ou soudées à la périphérie ou au centre du disque et du soin apporté à ce travail. Dans les exemples révélés par les figures 1 et 5, il est possible si on désire qu'il y ait un écoulement d'air du centre vers la périphérie du disque lors de sa rotation, de ne pas fixer l'élément souple à la périphérie du disque et de prévoir des petits trous de passage pour l'air vers son centre. Dans ce cas, la vitesse de rotation du disque contribue à décoller légèrement l'élément souple de la périphérie du disque et permet un écoulement d'air du centre vers le bord extérieur du disque. Comme dans l'exemple précédent, l'élément souple peut recevoir un traitement de durcissement de sa face externe et peut comporter une zone de plissement.

Dans les deux exemples cités, l'élément souple est relativement mince ce qui peut amener une certaine perméabilité à l'humidité nuisible à la couche thermosensible par dépôt de gouttelettes d'eau et oxydation de la couche. Afin de remédier à ces inconvénients, il entre dans le cadre de l'invention de garnir la face interne de l'élément souple d'un revêtement barrière à l'humidité. Ce revêtement doit être transparent au rayonnement optique de lecture ou d'écriture et peut être constitué d'une fine pellicule d'or, de platine, de palladium ou d'un alliage à base de ces éléments. Pour combattre l'oxydation de la couche thermosensible on peut disposer dans la chambre annulaire à des endroits situés en dehors du chemin du rayonnement optique un matériau facilement oxydable jouant le rôle de gatter. Ce matériau peut être un métal plus électropositif que la couche métallique supportant la couche thermodégradable, par exemple du zinc ou du manganèse, déposé par un procédé électrochimique ou par évaporation. On peut également employer une couche organique contenant en suspension des particules métalliques ou des oxydes métalliques insaturés, par exemple une peinture au minimum.

Sur la figure 5, les références 29 et 30 désignent respectivement le revêtement barrière à l'humidité et le matériau facilement oxydable placé selon une couronne concentrique au trou central.

Quel que soit l'élément ayant la forme d'une cuvette, le disque optique selon l'invention peut être placé sous une couvre-disque qui demeure fixe pendant la rotation du disque. Ce couvre-disque, en dehors d'une protection mécanique du disque, évite que l'élément souple n'aille toucher la couche sensible pendant l'utilisation par exemple si l'étanchéité à l'extérieur du disque était insuffisante. L'effet recherché consiste à créer une dépression dans l'espace compris entre le disque protégé et le couvre-disque qui empêche l'élément souple de venir se coller contre la couche sensible.

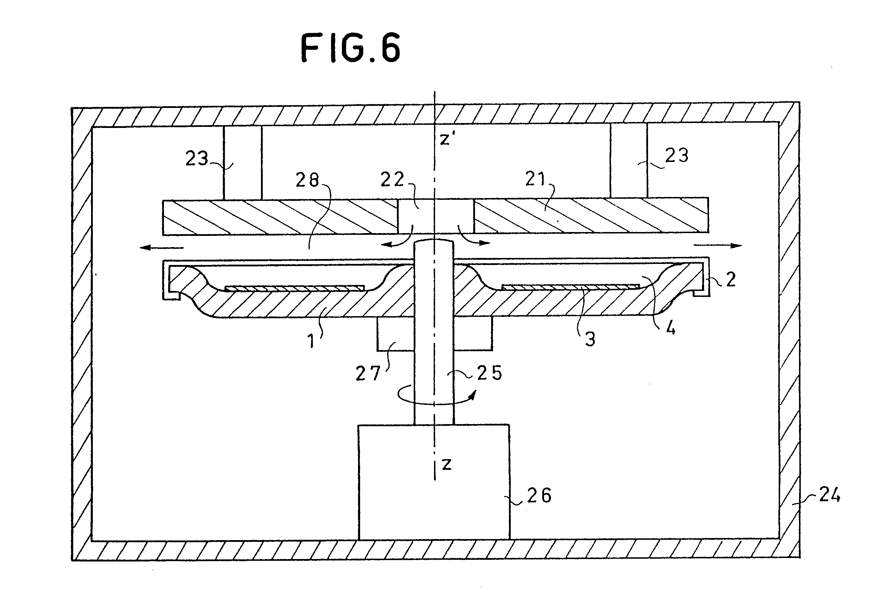

La figure 6 est une vue en coupe d'un système de lecture ou d'écriture d'un disque optique protégé et comprenant un couvre-disque. Cette figure montre un système de lecture fixé sur un boîtier 24 et un moteur 26 qui entraîne par l'intermédiaire d'une broche 25 un disque optique protégé selon l'invention reposant sur un plateau 27 solidaire de la broche 25. On a choisi comme disque protégé celui représenté à la figure 1 mais le système à couvre-disque peut utiliser des disques optiques protégés comme celui représenté à la figure 5. Le disque est surmonté d'un couvre-disque 21 fixé au boîtier 24 par des éléments 23 qui permettent un passage de l'air entre le couvre-disque et le boîtier 24. Le couvre-disque est placé parallèlement au disque protégé. Il a une forme circulaire et son axe de symétrie est confondu avec l'axe zz' qui est aussi l'axe de symétrie de la broche 25, du plateau 27 et du disque optique. L'épaisseur du coussin d'air 28 séparant le disque du couvre-disque peut aller jusqu'à quelques millimètres. Le couvre-disque possède un trou central 22. Quand le système est en fonctionnement, du fait de la rotation du disque, le coussin d'air 28 subit dans sa masse des déplacements qui tendent à chasser l'air vers l'extérieur. Il se produit donc un écoulement d'air dans l'espace compris entre le disque et le couvre-disque, le trou 22 étant l'entrée de l'écoulement d'air et la périphérie du coussin d'air sa sortie selon les flèches placées sur la figure 6. La surface d'entrée de l'air étant inférieure à sa surface de sortie, la pression de l'air entre le disque et le couvre-disque est moins élevée dans une zone voisine du milieu de la plage d'inscription 3 qu'au niveau de la broche 25. Il se crée donc une dépression dans la partie du coussin d'air 28 situé au-dessus de la plage d'inscription qui empêche l'élément souple 2 de venir toucher la plage d'inscription. Pour donner accès au rayonnement optique, le couvre-disque 21 doit être pourvu d'une entaille située le long d'un rayon du disque et suffisamment large pour permettre le passage de l'objectif assurant la focalisation du rayonnement optique.

Une variante de couvre-disque consiste en un plateau placé de la même façon que le couvre-disque 21 mais ne possèdant pas de trou central. Dans ce cas, c'est uniquement l'effet de la force centrifuge qui assure une dépression du coussin d'air 28 pendant la rotation du disque. Cette situation se rencontre par exemple lorsque le disque est dans une cassette ayant pour fonction principale de faciliter la manutention du disque et de garantir une protection mécanique totale. Dans ce cas, la fonction de couvre-disque peut être remplie par la paroi de la cassette en regard de l'élément souple.

Il entre également dans le cadre de l'invention de fabriquer des disques lisibles sur leurs deux faces par une symétrie de disposition par rapport au plan médian de l'élément rigide.

L'invention permet de réaliser des disques optiques protégés qui ne nécessitent pas d'entretoises et qui sont d'une élaboration simple et peu coûteuse. L'élément de protection autorise un passage sans perturbation du rayonnement de lecture ou d'écriture contribuant ainsi à sa bonne focalisation sur la couche sensible.

**Revendications**

1. Disque optique protégé pour l'enregistrement d'information au moyen d'un faisceau optique incident focalisé, ledit disque comprenant une chambre annulaire (4, 20) dans laquelle est située une structure enregistrable (3,18) avec ledit faisceau optique et un trou central qui permet le passage d'une broche d'entraînement; ladite structure (3, 18) ayant une surface exposée à l'atmosphère remplissant ladite chambre (4, 20); ladite chambre étant délimitée par un élément (2, 17) de matériau réfringent et par un élément support de ladite structure (1, 16) ayant une rigidité supérieure, lesdits éléments étant réunis l'une à l'autre par des moyens de jonction situés dans des plages annulaires encadrant ladite chambre annulaire (4, 20); l'un desdits éléments (1, 2, 16, 17) présentant une dépression annulaire dont le fond plan est parallèle à ladite surface et dont les rebords intérieur et extérieur coaxiaux forment ladite jonction avec l'autre desdits éléments, caractérisé en ce que ledit élément (2, 17) de matériau réfringent est un élément souple, en ce que lesdits moyens de jonction assurent une étanchéité meilleure à la périphérie de ladite chambre qu'au centre pour éviter que ledit élément souple puisse venir toucher la plage d'inscription contenue dans ladite surface, et en ce qu'au moins celui desdits éléments ayant une rigidité supérieure est muni dudit trou central.

2. Disque optique selon la revendication 1, caractérisé en ce que lesdits moyens de jonction sont des moyens de jonction à fuite ménageant entre lesdits éléments des passages d'air.

3. Disque optique selon la revendication 2, caractérisé en ce que 'la fixation dudit élément souple porte sur une surface plus importante le long du rebord extérieur que le long du rebord intérieur.

4. Disque optique selon l'une quelconque des revendications 1 à 3, caractérisé en ce que ledit élément souple (2) comprend au moins un plissement annulaire contribuant à sa souplesse et agencé à proximité d'une desdites plages annulaires et en dehors de la plage d'action dudit faisceau optique sur ladite structure.

5. Disque selon l'une quelconque des revendications 1 à 4, caractérisé en ce que ladite dépression appartient audit élément support ayant un rigidité supérieure (1).

6. Disque optique selon l'une quelconque des revendications 1 à 5, caractérisé en ce que ladite dépression appartient audit élément souple (17).

7. Disque optique selon l'une quelconque des revendications 1 à 6, caractérisé en ce que ledit élément souple (17) comporte une feuille de matière organique dont l'épaisseur est sélectionnée pour transmettre ledit faisceau optique avec une inégalité de chemin optique provenant de la birefringence de ladite feuille, au plus égale au dixième de longueur d'onde du rayonnement qu'il contient.

8. Disque optique selon l'une quelconque des revendications 1 à 7, caractérisé en ce que ledit élément support ayant une rigidité supérieure est métallique.

9. Disque optique selon la revendication 8, caractérisé en ce que ledit élément métallique est en aluminium.

10. Disque optique selon l'une quelconque des revendications 1 à 9, caractérisé en ce que la face externe dudit élément souple est munie d'une couche anti-rayure.

11. Disque optique selon l'une quelconque des revendications 1 à 10, caractérisé en ce que la face interne dudit élément souple est garnie d'un revêtement imperméable à l'humidité.

12. Disque optique selon la revendication 11, caractérisé en ce que ledit revêtement est un dépôt de métal inoxydable.

13. Disque optique selon l'une quelconque des revendications 1 à 12, caractérisé en ce que ladite chambre annulaire renferme un matériau aisément oxydable.

14. Système d'enregistrement et de lecture d'information comprenant un disque optique protégé selon l'une quelconque des revendications précédentes, ledit système comprenant des moyens de mise en rotation dudit disque et un couvre disque, caractérisé en ce que ledit couvre disque est agencé pour former avec la face externe dudit élément jouple un coussin d'air; la dépression dans ledit coussin résultant de l'écoulement centrifuge induit par la rotation dudit disque pour contrecarrer la tendance dudit élément mince à venir en contact avec ladite surface.

15. Système selon la revendication 14, caractérisé en ce que ledit couvre disque est perméable audit faisceau optique.

16. Système selon l'une quelconque des revendications 14 et 15, caractérisé en ce que ledit disque étant logé dans une cassette, ledit couvre disque fait partie intégrante de ladite cassette.

**Patentansprüche**

1. Geschützte optische Scheibe zum Einschreiben von Informationen mittels eines einfallenden gebündelten Lichtbündels, wobei die Scheibe eine ringförmige Kammer (4, 20), in der sich eine mit dem optischen Bündel beschreibbare Struktur (3, 18) befindet, und ein zentrales Loch aufweist, das den Durchgang eines Antriebsstifts ermöglicht; wobei eine Fläche der Struktur (3, 18) der die Kammer (4, 20) füllenden Atmosphäre ausgesetzt ist und die Kammer von einem Element (2, 17) aus lichtbrechendem Material und von einem die Struktur tragenden Element (1, 16), das eine höhere Streifigkeit hat, begrenzt wird, wobei die Elemente miteinander durch Verbindungsmittel verbunden sind, die sich in ringförmigen, die ringförmige Kammer (4, 20) einrahmenden Bereichen befinden; wobei eines der Elemente (1, 2, 16, 17) eine ringförmige Vertiefung aufweist, deren ebener Boden parallel zu Fläche verläuft und deren koaxiale Innen- und Außenränder die genannte Verbindung mit dem anderen der genannten Elemente bilden, dadurch gekennzeichnet, daß das Element (2, 17) aus lichtbrechendem Material ein biegsames Element ist, daß die Verbindungsmittel eine bessere Dichtheit an der Peripherie der Kammer als in der Mitte bewirken, um zu vermeiden, daß das biegsame Element den in der Fläche enthaltenen Einschreibbereich berührt, und daß zumindest dasjenige der Elemente, das eine größere Steifigkeit hat, mit dem zentralen Loch versehen ist.

2. Optische Scheibe nach Anspruch 1, dadurch gekennzeichnet, daß die Verbindungsmittel Leck-Verbindungsmittel sind, die zwischen den genannten Elementen Luftdurchlässe freilassen.

3. Optische Scheibe nach Anspruch 2, dadurch gekennzeichnet, daß die Befestigung des biegsamen Elements sich über eine größere Fläche entlang des äußeren Rands als entlang des inneren Rands erstreckt.

4. Optische Scheibe nach einem beliebigen der Ansprüche 1 bis 3, dadurch gekennzeichnet, daß das biegsame Element (2) mindestens einen ringförmigen Falz aufweist, der zu seiner Biegsamkeit beiträgt und in der Nähe eines der Ringbereiche und außerhalb des Einwirkungsbereichs des optischen Bündels auf die Struktur angeordnet ist.

5. Scheibe nach einem beliebigen der Ansprüche 1 bis 4, dadurch gekennzeichnet, daß die Vertiefung zu dem Trägerelement mit größerer Steifigkeit (1) gehört.

6. Optische Scheibe nach einem beliebigen der Ansprüche 1 bis 5, dadurch gekennzeichnet, daß die Vertiefung zum biegsamen Element (17) gehört.

7. Optische Scheibe nach einem beliebigen der Ansprüche 1 bis 6, dadurch gekennzeichnet, daß das biegsame Element (17) ein Blatt aus organischem Material aufweist, dessen Dicke so gewählt ist, daß das optische Bündel mit einer Ungleichheit des optischen Wegs übertragen wird, die von der Doppelbrechung des Blatts kommt und höchstens gleich einem Zehntel der Wellenlänge der Strahlung beträgt, die es enthält.

8. Optische Scheibe nach einem beliebigen der Ansprüche 1 bis 7, dadurch gekennzeichnet, daß das Trägerelement mit höherer Steifigkeit metallisch ist.

9. Optische Scheibe nach Anspruch 8, dadurch gekennzeichnet, daß das metallische Element aus Aluminium ist.

10. Optische Scheibe nach einem beliebigen der Ansprüche 1 bis 9, dadurch gekennzeichnet, daß die Außenseite des biegsamen Elements mit einer kraftfesten Schicht bedeckt ist.

11. Optische Scheibe nach einem beliebigen der Ansprüche 1 bis 10, dadurch gekennzeichnet, daß die Innenseite des biegsamen Elements mit einer feuchtigkeitsdurchlässigen Schicht bedeckt ist.

12. Optische Scheibe nach Anspruch 11, dadurch gekennzeichnet, daß die Schicht ein Überzug aus rostfreiem Metall ist.

13. Optische Scheibe nach einem beliebigen der Ansprüche 1 bis 12, dadurch gekennzeichnet, daß die ringförmige Kammer ein leicht oxidierbares Material einschließt.

14. Informationsschreib- und Lesesystem mit einer geschützten optischen Scheibe nach einem der vorhergehenden Ansprüche, wobei das System Mittel, um die Scheibe in Drehung zu versetzen, und eine Scheibenabdeckung besitzt, dadurch gekennzeichnet, daß die Scheibenabdeckung so ausgebildet ist, daß sie mit der Außenfläche des biegsamen Elements ein Luftkissen bildet, wobei der Unterdruck in diesem Luftkissen von der Zentrifugalströmung herrührt, die durch die Drehung der Scheibe induziert ist, um der Tendenz des biegsamen Elements, die genannte Fläche zu berühren, entgegenzuwirken.

15. System nach Anspruch 14, dadurch gekennzeichnet, daß die Scheibenabdeckung für das Lichtbündel durchlässig ist.

16. System nach einem der Ansprüche 14 und 15, dadurch gekennzeichnet, daß die Scheibe in einer Kassette liegt und daß die Scheibenabdeckung Bestandteil der Kassette ist.

## Claims

1. A protected optical disk for the registering of informations by means of an incident focalised optical bundle, said disk comprising an annular chamber (4, 20) in which is situated a structure (3, 18) which can be inscribed by said optical bundle, and a central hole permitting the passage of a drive pin, said structure (3, 18) having a surface exposed to the atmosphere filling said chamber (4, 20); said chamber being delimited by an element (2, 17) of a refringent material and by an element (1, 16) supporting said structure and having a higher stiffness, said elements being fixed to one another by junction means situated in annular zones framing said annular chamber (4, 20); one of said elements (1, 2, 16, 17) presenting an annular depression, the plane bottom of which is parallel to said surface and the coaxial inner and outer edges of which form said junction with the other one of said elements, characterized in that said element (2, 17) of refringent material is a flexible element, in that said junction means ensure a better tightness at the periphery of said chamber than in the center in order to avoid that said flexible element touches the inscription zone contained in said surface, and in that at least the element having a higher stiffness is supplied with said central hole.

2. An optical disk according to claim 1, characterized in that said junction means are leakage junction means leaving air passages between said elements.

3. An optical disk according to claim 2, characterized in that the fixation of said flexible element extends over a greater surface along the outer edge than along the inner edge.

4. An optical disk according to any one of claims 1 to 3, characterized in that said flexible element (2) comprises at least one annular fold contributing to its flexibility and being placed near one of said annular zones and outside of the action range of said optical bundle on said structure.

5. A disk according to any one of claims 1 to 4, characterized in that said depression belongs to said carrier element having a higher stiffness (1).

6. An optical disk according to any one of claims 1 to 5, characterized in that said depression belongs to said flexible element (17).

7. An optical disk according to any one of claims 1 to 6, characterized in that said flexible element (17) comprises a sheet of organic material, the thickness of which is chosen so as to transmit said optical bundle with an optical path inequality resulting from the birefringency of said sheet, at most equal to the tenth of wave length of the rays it contains.

8. An optical disk according to any one of claims 1 to 7, characterized in that said carrier element with a higher stiffness is metallic.

9. An optical disk according to claim 8, characterized in that said metallic element is made of aluminium.

10. An optical disk according to any one of claims 1 to 9, characterized in that the outer face of said flexible element is supplied with a scratch-resistant layer.

11. An optical head according to any one of claims 1 to 10, characterized in that the inner face of said flexible element is furnished with an envelope which is impermeable to humidity.

12. An optical disk according to claim 11, characterized in that said envelope is a layer of an inox metal.

13. An optical disk according to any one of claims 1 to 12, characterized in that said annular chamber encloses an easily rusting material.

14. An information recording and reading system comprising a protected optical disk according to any one of the preceding claims, the system comprising means for rotatively driving said disk, and a disk cover, characterized in that said disk cover is arranged to constitute an air cushion together with the outer surface of said resilient element, wherein the depression in said cushion results from the centrifugal flow induced by the rotation of said disk in order to balance the tendency of said resilient element to touch said surface.

15. A system according to claim 14, characterized in that the disk cover is permeable to said optical bundle.

16. A system according to any one of claims 14 and 15, characterized in that said disk being installed in a cartridge, said disk cover constitutes an integral part of said cartridge.

# FIG.1

# FIG.2

# FIG.3

# FIG.4

# FIG.5

FIG.6